# EUROPEAN PATENT SPECIFICATION

(11) **EP 3 169 525 B1**
(45) Date of publication and mention of the grant of the patent: **12.09.2018**
(21) Application number: 15767246.0
(22) Date of filing: 12.07.2015
(51) Int. Cl.: B41J 2/175, B41J 2/19, F16K 24/04, B01D 19/00, B01D 36/00

(54) **AUTOMATIC AIR VENT**
AUTOMATISCHES ENTLÜFTUNGSVENTIL
SOUPAPE D'AERATION AUTOMATIQUE

(30) Priority: 18.07.2014 BE 201400564
(43) Date of publication of application: 24.05.2017
(73) Proprietor: Arranged bvba, 3740 Bilzen (BE)
(72) Inventor: EURLINGS, Martin, B-3740 Bilzen (BE)
(74) Representative: DenK iP
(86) International application number: PCT/IB2015/055268
(87) International publication number: WO 2016/009318

(56) References cited:
- CN-A- 103 728 027
- JP-A- 2001 027 347

## Description

### Scope of the invention

This invention generally relates to the venting of air from systems which contain a fluid, such as systems in which ink or lacquer is present.

### Background of the invention

Fluid systems in which fluids are transported under pressure - such as inkjet printers or filter systems - often encounter the problem that air accumulates somewhere in this system which disturbs the functionality of the system. There are many possibilities of how air can enter into such a fluid system, such as the air can have been trapped in the fluid itself, or the air can also have entered into the fluid system by the opening of the fluid system, or the air can have entered into the fluid system via a pump used for pressurising the fluid. In order to guarantee the proper functioning of the system, it is often important that the accumulated air is removed.

For example, industrial processes adopting filtration techniques often encounter air that accumulates in the filter devices, such as filter cartridges in filter housings or filter capsules. Air enters the fluid lines when the filters or the fluid are replaced, but can also end up in the lines via pumps and valves, particularly when there are many temperature and pressure changes causing vacuums, or when synthetic lines are used in which gas diffusion can occur. These air bubbles can cause a nuisance in the processes that take place after filtration, such as an air bubble causing errors on a cast (coated) surface in a casting (coating) process. Wherever an air bubble occurs in the flow used for casting or coating, there will not be a casting (coating) layer which will thus produce an error.

But air is a problem in other processes too, for example for digital push buttons, where an air bubble will cause that a print nozzle of the print head no longer receives any ink, or in the food industry for example, where excess air in the fluid can promote the growth of bacteria or yeast.

These fluid systems are currently often manually vented, but it is difficult to estimate when there will be air bubbles in the system.

Current air venting systems sometimes also use a floater to remove the accumulated air in an automated manner. Here, the floater floats on top of the fluid. When the pressure of the air bubble rises, the fluid will drop so that the floater will drop too and the seal made by the floater will be released. A disadvantage is that the movement of the floater can be disturbed by dirt for example that is present in the fluid or due to the fact that the fluid dries onto the drive mechanism when the fluid comes into contact with air.

Patent NL 1 026 222 shows a motionless air vent for fluids that uses a porous element. This porous element can allow free gases to pass but is impermeable for the fluid present in the system. However, the pressure of the fluid against the membrane cannot be very high in order to prevent that the fluid would seep through the membrane too.

Patent DE 10 2012 100 592 is a variation of NL 1 026 222 and does not include a solution for preventing that the fluid would dry onto the porous membrane.

However, both patents present a significant problem. The harmonisation of the materials must be perfect in order to guarantee proper functioning: proper functioning is achieved for example when a hydrophilic fluid is used with a hydrophobic membrane, such as water in combination with a porous PTFE membrane. Only in harmonised conditions, the system can function. When two components have equal hydrophilic and hydrophobic properties, the porous membrane will get moist and the fluid can flow through the membrane, particularly when there are vacuums.

But even when the hydrophilic/hydrophobic harmonisation is perfect, in the event of a certain pressure - the so-called intrusion pressure of the membrane - the membrane will get moist and the fluid will flow through the membrane. For the combination; water with a 0.2 micron PTFE membrane, the intrusion pressure is approximately 3 bar.

So neither patent can be applied in systems that operate on overpressure or which have frequently changing fluid properties or configurations. Also, the user will be required to know the properties of the fluid and of the porous membrane well, which is not always the case. As a result, the described methods cannot be applied universally.

Therefore, there is room for a more efficient system and a more efficient method for removing air and gas bubbles from fluid systems.

### Summary of the invention

An objective of embodiments of the present invention is to automatically remove an excess amount of air from a fluid system.

This aim is achieved by a device, a method or the use of a device according to embodiments of the present invention.

The invention relates to an air venting device for the venting of air from a fluid system, the air venting device comprising an air chamber, a sensor, and an air venting valve, where the sensor can detect a fluid level in the air chamber without coming into contact with the fluid and where the air venting valve can be driven on the basis of the sensor measurement (such a sensor system is known from JP2001-027347).

The air chamber comprises two parts that can be mounted on top of each other, a first part onto or into which the sensor and the air venting valve can be mounted and a second part that can be connected up to the fluid system.

It is an advantage of embodiments of the present invention that the air chamber consists of two parts that can be dismantled. When the maximum permissible fluid level of the air venting device has been set such that during operation, only the second part comes into contact with the fluid, only the second part will need to be cleaned or replaced. When it is intended that this second part is regularly replaced, this second part can be made from a less durable material than the first part that is used again and again. It is an advantage of embodiments of the present invention that when inks or lacquers have dried against the second part of the air chamber, only this second part will need to be replaced.

It is an advantage of embodiments of the present invention that air in the fluid system can be gathered in an air chamber from where the air can be removed via a small air venting valve. It is an advantage of embodiments of the present invention that the sensor can detect the fluid level without coming into contact with the fluid. This prevents contamination of the sensor. It is an advantage of embodiments of the present invention that the detection of the fluid level by the sensor is independent from the density or the viscosity of the fluid in question. Furthermore, in embodiments of the present invention, water or solvents, translucent or non-translucent fluids, solutions, emulsions or dispersions, or sticky fluids can be used. In any of these cases, the level can be determined by the use of the sensor (such as an ultrasonic sensor). It is an advantage of embodiments of the present invention that no moving components are required in the air chamber for measuring the fluid. With moving components, the movement can become hindered after a while because the moving components have been contaminated by the fluid. It is an advantage of embodiments of the present invention that both the sensor and the air venting valve do not come into contact with the fluid during normal operation of the air venting device. As the air venting valve does not come into contact with the fluid, this air venting valve cannot become blocked by particles that may be present in the fluid (such as paint that dries onto the air venting valve). Therefore, it is an advantage of embodiments of the present invention that the air venting valve cannot be blocked or damaged by contact with the fluid in the fluid system providing there is no contact between the two. It is an advantage of embodiments of the present invention that cleaning of the air chamber device is easier than when the sensor were in contact with the fluid or when the sensor comprised moving components that came into contact with the fluid.

A controller can be connected up to the sensor and the controller can be connected up to the air venting valve so that the controller can read the measurement data from the sensor and can drive the air venting valve.

It is an advantage of embodiments of the present invention that the controller can open and close the air venting valve based on the level of the fluid level. It is an advantage of embodiments of the present invention that no computer is required to drive the air venting device during normal operation of the air venting device.

A computer can be attached to the controller or the sensor and the air venting valve.

It is an advantage of embodiments of the present invention that an operator can set the desired levels using the computer. When the set maximum fluid level is reached, the air venting valve will be closed. When the set minimum fluid level is reached, the air venting valve will be opened. It is an advantage of embodiments of the present invention that the fluid level and the position (open/closed) of the air venting valve can be read using the computer.

The sensor can be an ultrasonic detector. It is an advantage of embodiments of the present invention that the level of the fluid in the air chamber can be detected even if a foam layer is present on the fluid. It is an advantage of embodiments of the present invention that both the maximum and the minimum fluid levels can be detected by one and the same sensor. The sensor can be an optical detector and/or a sensor for radio waves (radar).

The present invention also relates to the use of an air venting device such as described above for the venting of air from lines in a fluid system, such as ink supply lines of or in an inkjet printer.

It is an advantage of embodiments of the present invention that the presence of air in a nozzle of the inkjet printer is prevented. Such an air bubble can disturb the proper functioning of the printer because the ink no longer reaches the nozzle of the print head.

The present invention also relates to an air venting device for the venting of air from a fluid system, the air venting device comprising an air chamber, a sensor, and an air venting valve, where the sensor can detect a fluid level in the air chamber without coming into contact with the fluid and where the air venting valve can be driven on the basis of the sensor measurement. The air venting device can comprise further features as described above in one of the embodiments as described below as an example.

The present invention also relates to a method for the venting of air from a fluid system, the method comprising a closed loop consisting of two successive steps,
- a first step where the fluid level in an air chamber is detected,
- a second step where an air venting valve is opened as soon as the fluid level has dropped below a certain value or where the air venting valve is closed as soon as the fluid level has risen above a certain value.

It is an advantage of embodiments of the present invention that the venting of air from the fluid system can occur in an automated manner. The fluid level in the air chamber is kept between a low and a high level in the air chamber specified by the user. The high fluid level is set such that the fluid does not come into contact with the sensor and the air venting valve or in certain embodiments with the first part of the air chamber. The low level is set such that no air bubbles enter into the fluid system.

In the method, it is also possible to have a step provided for applying an ultrasonic process for the agglomeration of air bubbles.

The present invention also comprises a coating line for coating and/or casting a surface, where the coating line comprises at least one air venting system as described above. The coating line can be adapted to coat and/or cast a film.

Specific and preferable aspects of the invention have been included in the attached independent and dependent claims. Features of the dependent claims can be combined with features of the independent claims and with features of other dependent claims such as indicated and not only as expressly brought forward in the claims.

These and other aspects of the invention will be apparent from and be clarified by reference to the embodiment(s) described below.

### Short description of the figures

FIG. 1 shows a schematic representation of an air venting device according to embodiments of the present invention.
FIG. 2 shows a different schematic representation of an air venting device according to embodiments of the present invention.
FIG. 3 shows an air venting device connected up to a filter element according to embodiments of the present invention.
FIG. 4 shows an air venting device connected up to a gas outlet of a bubble catcher according to embodiments of the present invention.
FIG. 5 shows an air venting device the outlet of which is connected up to an extension to which an air venting valve is connected up according to embodiments of the present invention.
FIG. 6 shows an air venting device the air chamber of which comprises a first part and a second part that are interconnected according to embodiments of the present invention.
FIG. 7 shows an air venting device with a closed air venting valve, the air venting chamber of which is filled with a fluid up to just under the outlet and in which air bubbles are present in the fluid according to embodiments of the present invention.
FIG. 8 shows an air venting device the air venting chamber of which is only filled with fluid up to below a minimum level and the air venting valve of which is according to embodiments of the present invention.
FIG. 9 shows implementation steps in a method corresponding with an embodiment of the present invention.

The illustrations are only schematic and not restrictive. It is possible that the dimensions of some components have been exaggerated and have not been represented to scale in the figures for illustrative purposes.

Reference numbers used in the claims cannot be interpreted to restrict the scope of protection. In the various figures, the same reference numbers refer to the same or similar elements.

### Detailed description of illustrative embodiments

The present invention will be described in respect of special embodiments and with reference to certain drawings, however the invention will not be restricted to this but will only be restricted by the claims. The drawings described are schematic and not restrictive. In the drawings, the dimensions of some elements have been enlarged and have not been drawn to scale for illustrative purposes. The (relative) dimensions sometimes do not correspond with the embodiment of the invention.

Furthermore, the terms first, second, third and the like in the description and in the claims are used to distinguish similar elements and are not necessarily used for describing an order, nor in time, nor in space, nor in ranking nor in any other manner. It should be understood that the terms used in this way are interchangeable in appropriate circumstances and that the embodiments of the invention described are suitable to work in a different order than described or indicated here.

Furthermore, the terms top, bottom, above, in front of and the like used in the description and the claims are used for description purposes and not necessarily to describe relative positions. It should be understood that the terms used as such are interchangeable in given circumstances and that the embodiments of the invention described herein are also suitable for functioning according to different orientations than described or indicated here.

It should be noted that the term "contains", as used in the claims, should not be interpreted as being restricted to the items described thereafter; this term does not exclude any other elements or steps. It can be interpreted as specifying the presence of the features, values, steps or components indicated which are referred to but does not exclude the presence or addition of one or several other features, values, steps or components, or groups thereof. So, the extent of the expression "a device comprising items A and B" should not be restricted to devices consisting of components A and B only. It means that in respect of the present invention, A and B are the only relevant components of the device.

Reference throughout this specification to "one embodiment" or "an embodiment" means that a specific feature, structure or characteristic described in connection with the embodiment has been included in at least one embodiment of the present invention. So, the occurrence of the expressions "in one embodiment" or "in an embodiment" in various locations throughout this specification do not necessarily need to refer to the same embodiment all the time, but can do so. Furthermore, the specific features, structures or characteristics can be combined in any suitable manner as would be clear to a person skilled in the art on the basis of this publication, in one or several embodiments.

Similarly, it should be appreciated that in the description of sample embodiments of the invention, various features of the invention are sometimes grouped together in one single embodiment, figure or description thereof intended to streamline the publication and to help the understanding of one or several of the various inventive aspects. This method of publication should therefore not be interpreted as a reflection of an intention that the invention requires more features than explicitly mentioned in each claim. Rather, as the following claims reflect, inventive aspects lie in fewer than all features of one single previously publicised embodiment. So, the claims following on from the detailed description have been explicitly included in this detailed description, with every independent claim being a separate embodiment of this invention.

Furthermore, while some embodiments described herein contain some, but not other, features included in other embodiments, combinations of features from various embodiments are intended to be within the scope of the invention, and form these various embodiments as would be understood by the person skilled in the art. For example, in the following claims, any of the embodiments described can be used in any combination.

In the description provided here, a large number of specific details are raised. It can therefore be understood that embodiments of the invention can be embodied without these specific details. In other cases, well-known methods, structures and techniques are not shown in detail in order to keep this description clear.

Where in embodiments of the present invention reference is made to the top or bottom of air venting device 100 or to a high or a low level in the air venting device, it will be assumed that the air venting device is in a position that allows normal operation. This means that the outlet of the air venting device is oriented upwards, away from the ground surface.

In a first aspect, the present invention relates to an air venting device 100 for the venting of air from a fluid system. This fluid system can for example comprise filters in which air can accumulate. The fluid system can also comprise a bubble catcher 410 which catches air and gas bubbles that are released for example after ultrasonic treatment of a fluid. The ultrasonic treatment ensures that trapped gas in the fluid is transformed into air and gas bubbles which, when agglomerated further into larger air and gas bubbles, can be separated from the fluid using a bubble catcher. In one specific application, the present invention not restricted as a result, the air venting device 100 is connected up to the fluid system of an inkjet printer that must be vented in order to prevent that air would end up in a nozzle of the inkjet printer.

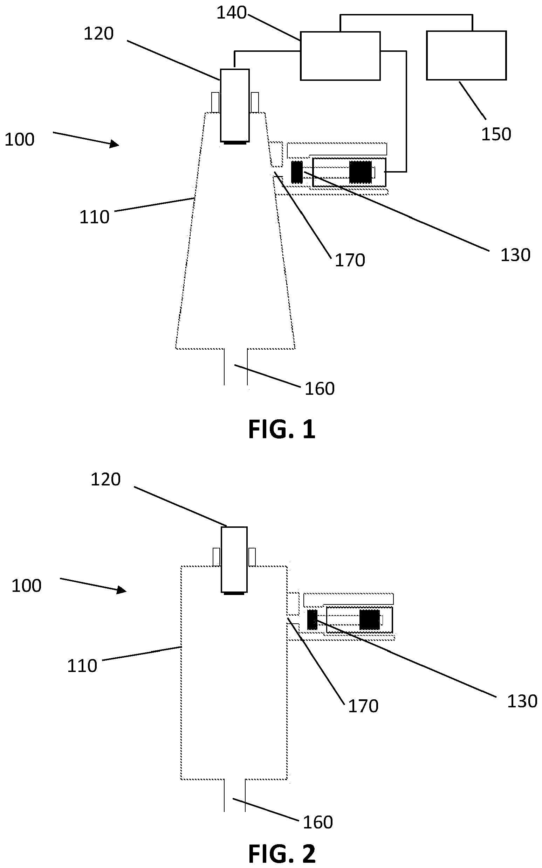

In embodiments of the present invention, the air venting device 100 comprises an air chamber 110, a sensor 120 and an air venting valve 130, as shown in FIG. 1. The air venting valve 130 can be mounted onto the outlet 170 of the air venting chamber 110 here. In the schematic example shown of FIG. 1, the air chamber 110 has a conic shape the widest side of which is at the bottom (the side that is connected up to the fluid system to be air vented), but embodiments are not limited by this. The shape of the air chamber 110 is preferably matched to the shape of the type of the sensor. An ultrasonic sensor for example has a conic field of vision but preferably does not see the sides as otherwise measurements cannot be taken deeply enough. The diameter is preferably chosen not too big as this would have the disadvantage that the air volume would become too great and the fluid would rise or drop only slowly in the air chamber as a result. However, it is an advantage that the fluid moves quickly. In embodiments of the present invention, the air venting system 100 can or cannot be part of or directly mounted onto a fluid system. The inlet 160 of the air venting device 100 is typically connected up to an outlet of the fluid system. The outlet of the fluid system is chosen/designed such that the gases present in the fluid system can escape past it. As such, air and gas bubbles gather in the air chamber 110 which agglomerate into a larger bubble which the fluid level will push downwards. As soon as a certain volume of air or gas has been reached, the air venting valve 130 is opened so that the air or the gas can escape (the pressure inside the air chamber will then be greater than the pressure outside it). The air venting valve 130 will remain open until the minimum volume of air or gas is reached. In order to measure the volume of air or gas in embodiments of the present invention, a sensor 120 is used. This sensor 120 measures the level of the fluid in the air chamber 110. In some embodiments of the present invention, the sensor 120 is an optical sensor. Possibly several optical sensors will be used (e.g. one for measuring the high level and one for measuring the low level). In some embodiments of the present invention, the sensor 120 is an ultrasonic sensor. Alternatively or additionally, the sensor can also be adapted to detect radio waves, such as a radar sensor. It is an advantage that ultrasonic sensors can also accurately measure the fluid level through a layer of foam. The sensors can be adapted to measure over smaller and/or larger distances.

Preferably, the sensors are adapted to measure over smaller distances, for example within a range of 20 mm to 150 mm. The air chamber 110 can be made from metal or a synthetic or can consist of a combination of various materials. In embodiments of the present invention, the air venting valve 130 can be operated electronically. This allows for the air venting valve 130 to be driven automatically based on the signal coming from the sensor 120. The connection between the sensor 120 and the air venting valve can be analogue or digital. In the case of a digital connection, a controller 140 can be implemented between the sensor 120 and the air venting valve 130. In other embodiments, the sensor 120 can be read by a computer 150 which in turn drives the air venting valve 130. In yet other embodiments, the controller 140 can be programmed and/or checked using a computer 150. As such, in embodiments of the present invention, the desired maximum and minimum fluid level can be programmed via the computer 150 in the controller 140. In embodiments of the present invention, it is also possible to read the fluid level using the computer 150. This will for example allow the operator to start the air venting device, to set the minimum and maximum fluid level, to continuously monitor the state of the air venting device. Alternatively, this can of course occur automatically, for example on the basis of implemented algorithms.

As soon as the minimum fluid level has been reached, the controller 140 can open the air venting valve 130 causing the fluid level to rise again. This will prevent that an air bubble would form in the fluid system. As soon as the maximum fluid level has been reached, the controller 140 can close the air venting valve 130. The maximum fluid is preferably below the air venting valve 130 and below the sensor 120 so that neither are moistened by the fluid.

In FIG. 2, a similar embodiment of the present invention is shown as in FIG. 1. Instead of conically shaped, the air chamber 110 in this embodiment is cylindrically shaped.

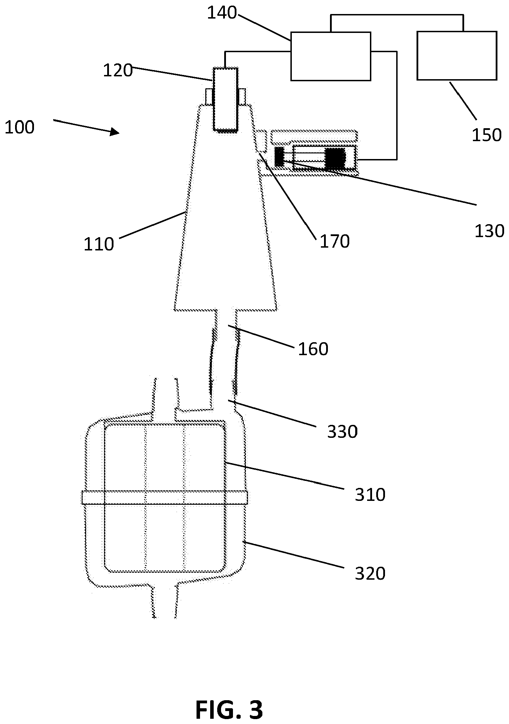

In FIG. 3, the air venting device 100 is connected up to a filter system consisting of a filter housing 320 containing a filter element 310. The gas outlet 330 of the filter system is connected up to the inlet of the air venting device 100. This way, it can be prevented that air gathers in the filter system. The air venting system will remove the air that is released from the filter system in an automated manner.

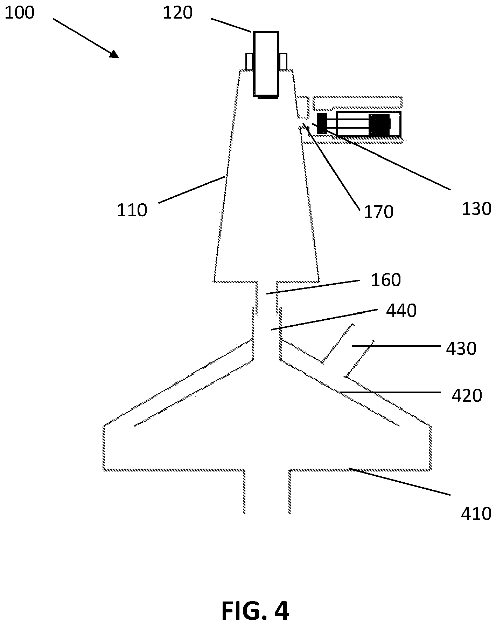

In FIG. 4, the air venting device 100 is connected to a bubble catcher 410. The funnel 420 guides the escaping gas bubbles to the gas outlet 440 of the bubble catcher. This is connected to the inlet 160 of the air chamber 110. The bubble catcher 410 also comprises a fluid outlet 430 past which the fluid will leave the bubble catcher without gas bubbles. In embodiments of the present invention, the fluid level in the air venting device 100 is kept between a minimum and a maximum level by opening or closing the air venting valve 130. This can occur in an automated manner using the sensor 120 which can measure the fluid level.

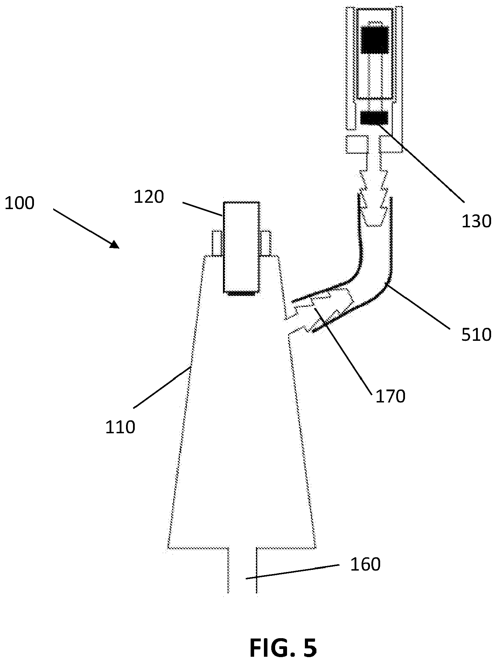

The embodiment of the present invention illustrated in FIG. 5 is an embodiment similar to the one illustrated in FIG. 1. Additionally, an extension 510 has been fitted onto the outlet 170 of the air chamber 110 here. The air venting valve 130 has been mounted onto the other end of the extension 510. This allows for the air venting valve 130 to be placed higher up making it easier to prevent that the air venting valve would come into contact with the fluid, or for the valve to be mounted into a different operation zone. The extension 510 can be a tube.

In embodiments of the present invention, the air chamber 110 comprises two parts. In a first part 610, the sensor 120 and the air venting valve 130 can be mounted. The second part 620 can be connected up to the fluid system that needs to be air vented. The first part 610 of the air chamber can be tightly connected up to the second part 620 of the air chamber by using a sealing system (for example an O ring 630 combined with a bayonet fitting). During the normal operation of the air venting device, the second part of the air chamber is located below the first part and during air venting, the fluid will reach a level that does not reach above the first part. As a result, the first part will not be contaminated by the fluid. By splitting the air chamber into two parts, the second part can also be exchanged when a liquid is exchanged, in which case it is not necessary for the air chamber to be cleaned. Providing the first part has not come into contact with the fluid, it will not be necessary to replace this part.

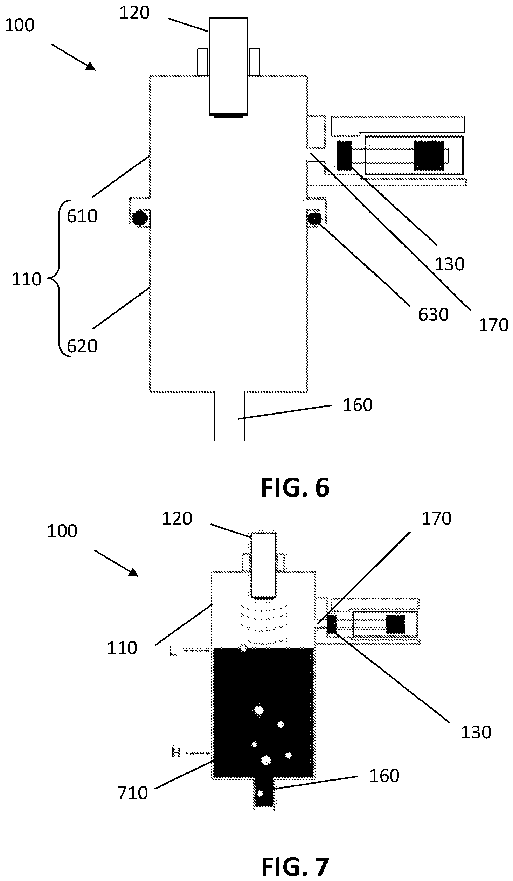

FIG. 6 shows an embodiment of the present invention where the air chamber 110 consists of two parts; a first part 610 and a second part 620. The first part 610 is the top part and can be mounted onto the bottom part 620. This can be achieved using clamps, thread, or a bayonet fitting for example. In order to provide a waterproof seal between them, a sealing ring (e.g. O ring) can be used. Both parts can have been made from different materials. The second part 620 can be made from plastic for example while the first part 610 is made from metal. In embodiments of the present invention, only the second part 620 will be moistened during the operation of the air venting device. Only this part will then need to be cleaned or replaced when the fluid is dried onto the second part for example.

In embodiments in which the air chamber consists of two parts, the air venting valve can be mounted remotely onto the first part, for example by using an extension. Alternatively, the air venting valve can be mounted directly onto the first part. Embodiments in which the air chamber consists of two parts, or at least two parts as further parts can be provided too, can further also have features and characteristics as shown in embodiments described above and/or described in one of the figures 1 to 5.

In a second aspect, the present invention relates to the use of an air venting device for the venting of air from lines. This can for example be the use of an air venting device in a printer system with ink reservoirs, such as an inkjet printer. By connecting the inlet 160 of the air chamber 110 up to the fluid system of the inkjet printer at the location where air bubbles gather, the air bubbles can automatically be removed by the air venting device 100. This can for example prevent air bubbles from blocking a nozzle of the inkjet printer.

In a third aspect, the present invention relates to a method 900 for the venting of air from a fluid system where in a first step 910, the fluid level in an air chamber is detected and where in a second step, an air venting valve 130 is opened as soon as the fluid level has dropped below a certain value or where the air venting valve 130 is closed as soon as the fluid has risen above a certain value. After the second step, the first step is carried out again so that both steps form a closed-loop system.

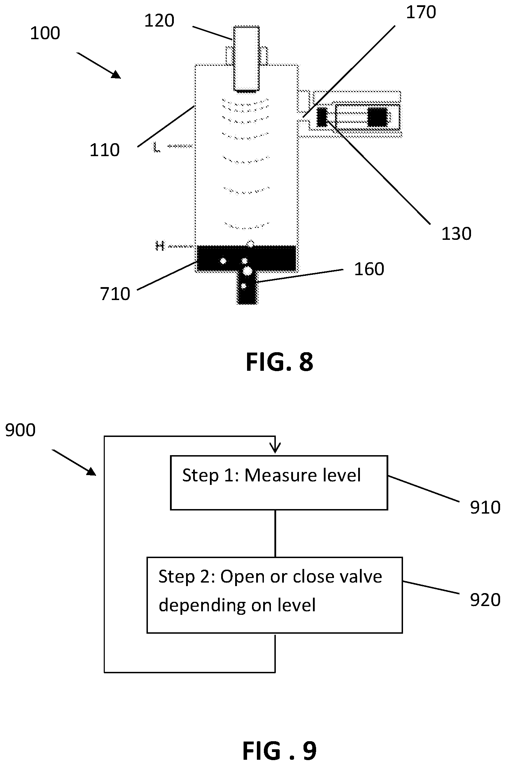

FIG. 7 shows an air venting device 100 in operation. Providing the fluid level has risen to the highest permissible level (L, corresponding with the minimum amount of gas), the air venting valve 130 is closed. The fluid level is detected using the sensor 120. The air or gas bubbles in the fluid 710 are released into the air chamber 110 and the fluid will drop back down due to the built-up pressure of the gas. As soon as the fluid level has dropped below a minimum level (H, corresponding with the maximum permissible amount of gas) the air venting valve 130 will be opened. This state is illustrated in FIG. 8. Because the pressure in the air chamber 110 is greater than the pressure outside it, the fluid level 710 will rise again.

FIG. 9 shows two steps that are typically carried out in a method 900 according to the present invention. In a first step 910, the fluid level in the air chamber 110 is measured. Then in a second step 920, the air venting valve 130 will be opened or closed according to the measuring result. If the fluid level is below a certain minimum level, the air venting valve 130 will be opened. If the fluid level is above a certain maximum level, the air venting valve 130 will be closed. After the second step, the first step will be carried out again. The fluid level measurements can happen continuously, at pre-determined times, can be determined empirically, can be determined on the basis of a neural network, can be set as a function of the application, etc.

The various aspects can easily be combined, and the combinations will also correspond with embodiments according to the present invention.

## Claims

1. An air venting device (100) for the venting of air from a fluid system, the air venting device comprising an air chamber (110), a sensor (120) and an air venting valve (130), where the sensor (120) is a contactless sensor that can detect a fluid level in the air chamber (110) without coming into contact with the fluid and where the air venting valve (130) can be driven on the basis of the sensor measurement,
**characterized in that** the air chamber (110) comprises two parts that can be mounted on top of each other, a first part (610) onto or into which the sensor (120) and the air venting valve (130) can be mounted and a second part (620) that can be connected up to the fluid system.

2. An air venting device (100) according to Claim 1, where a controller (140) is connected up to the sensor (120) and where the controller (140) is connected up to the air venting valve (130) so that the controller can read the measurement data of the sensor and can drive the air venting valve.

3. An air venting device (100) according to one of the above claims where a computer (150) is connected up to the controller (140) or to the sensor (120) and the air venting valve (130).

4. An air venting device (100) according to one of the above claims where the sensor (120) comprises an ultrasonic detector.

5. An air venting device (100) according to one of the above claims where the sensor (120) comprises an optic detector and/or a sensor for radio waves.

6. An air venting device (100) according to one of the previous claims, where the air venting valve can be mounted onto the first part (610) of the sensor via an extension.

7. Use of an air venting device (100) according to one of claims 1 to 6 for venting air from lines in a fluid system.

8. Use of an air venting device (100) according to one of claims 1 to 6 for venting air from lines in an inkjet printer.

9. A fluid system comprising an air venting system according to claims 1 to 6.

10. A fluid system according to claim 9, in which the fluid system is a printer.

11. A fluid system according to claim 10, in which the fluid system is an inkjet printer.

12. A coating line for coating and/or casting a surface, where the coating line comprises at least one air venting system according to claims 1 to 6.

13. A coating line according to claim 12, where the coating line is adapted to coat and/or cast a film.

## Patentansprüche

1. Entlüftungsvorrichtung (100) zur Entlüftung von Luft aus einem Fluidsystem, wobei die Entlüftungsvorrichtung eine Luftkammer (110), einen Sensor (120) und ein Entlüftungsventil (130) umfasst, wobei der Sensor (120) ein berührungsloser Sensor ist, der einen Fluidpegel in der Luftkammer (110) erfassen kann, ohne mit dem Fluid in Kontakt zu kommen, und wobei das Entlüftungsventil (130) auf der Grundlage der Sensormessung antreibbar ist,
**dadurch gekennzeichnet, dass** die Luftkammer (110) zwei Teile umfasst, die übereinander montiert werden können: Einen ersten Teil (610) auf oder in welchen der Sensor (120) und das Entlüftungsventil (130) montiert werden können und einen zweiten Teil (620), der mit dem Fluidsystem verbunden werden kann.

2. Entlüftungsvorrichtung (100) nach Anspruch 1, an der eine Steuerung (140) an den Sensor (120) angeschlossen ist und an der die Steuerung an das Entlüftungsventil (130) angeschlossen ist, so dass die Steuerung (140) die Messdaten des Sensors ablesen kann und das Entlüftungsventil antreiben kann.

3. Entlüftungsvorrichtung (100) nach einem der obigen Ansprüche, wobei ein Computer (150) an die Steuerung (140) oder an den Sensor (120) und das Entlüftungsventil (130) angeschlossen ist.

4. Entlüftungsvorrichtung (100) nach einem der obigen Ansprüche, wobei der Sensor (120) einen Ultraschalldetektor umfasst.

5. Entlüftungsvorrichtung (100) nach einem der obigen Ansprüche, wobei der Sensor (120) einen optischen Detektor und/oder einen Sensor für Funkwellen umfasst.

6. Entlüftungsvorrichtung (100) nach einem der vorstehenden Ansprüche, wobei das Entlüftungsventil über eine Verlängerung an dem ersten Teil (610) des Sensors montiert werden kann.

7. Verwendung einer Entlüftungsvorrichtung (100) nach einem der Ansprüche 1 bis 6 zum Entlüften von Leitungen in einem Fluidsystemen.

8. Verwendung einer Entlüftungsvorrichtung (100) nach einem der Ansprüche 1 bis 6 zum Entlüften von Leitungen in einem Tintenstrahldrucker.

9. Fluidsystem umfassend ein Entlüftungssystem nach den Ansprüchen 1 bis 6.

10. Fluidsystem nach Anspruch 9, bei dem das Fluidsystem ein Drucker ist.

11. Fluidsystem nach Anspruch 10, bei dem das Fluidsystem ein Tintenstrahldrucker ist.

12. Beschichtungsanlage zum Beschichten und/oder Gießen einer Oberfläche, wobei die Beschichtungsanlage mindestens ein Entlüftungssystem nach den Ansprüchen 1 bis 6 umfasst.

13. Beschichtungsanlage nach Anspruch 12, wobei die Beschichtungsanlage zum Beschichten und/oder Gießen eines Films angepasst ist.

## Revendications

1. Dispositif de purge d'air (100) pour la purge d'air depuis un système de fluides, le dispositif de purge d'air comprenant une chambre à air (110), un capteur (120) et une valve de purge d'air (130), où le capteur (120) est un capteur sans contact qui peut détecter un niveau de fluide dans la chambre à air (110) sans venir en contact avec le fluide et où la valve de purge d'air (130) peut être pilotée sur la base de la mesure du capteur,
**caractérisé en ce que**
la chambre à air (110) comprend deux parties qui peuvent être montées l'une par-dessus l'autre, une première partie (610) sur ou dans laquelle le capteur (120) et la valve de purge d'air (130) peuvent être montés et une seconde partie (620) qui peut être raccordée au système de fluides.

2. Dispositif de purge d'air (100) selon la revendication 1, où un dispositif de commande (140) est raccordé au capteur (120) et où le dispositif de commande (140) est raccordé à la valve de purge d'air (130) de sorte que le dispositif de commande puisse lire les données de mesure du capteur et puisse piloter la valve de purge d'air.

3. Dispositif de purge d'air (100) selon l'une des revendications ci-dessus, où un ordinateur (150) est raccordé au dispositif de commande (140) ou au capteur (120) et à la valve de purge d'air (130).

4. Dispositif de purge d'air (100) selon l'une des revendications ci-dessus, où le capteur (120) comprend un détecteur ultrasonique.

5. Dispositif de purge d'air (100) selon l'une des revendications ci-dessus, où le capteur (120) comprend un détecteur optique et/ou un capteur d'ondes radio.

6. Dispositif de purge d'air (100) selon l'une des revendications précédentes, où la valve de purge d'air peut être montée sur la première partie (610) du capteur via une extension.

7. Utilisation d'un dispositif de purge d'air (100) selon l'une des revendications 1 à 6 pour purger l'air depuis des lignes dans un système de fluides.

8. Utilisation d'un dispositif de purge d'air (100) selon l'une des revendications 1 à 6 pour purger l'air depuis des lignes dans une imprimante à jet d'encre.

9. Système de fluides comprenant un système de purge d'air selon les revendications 1 à 6.

10. Système de fluides selon la revendication 9, dans lequel le système de fluides est une imprimante.

11. Système de fluides selon la revendication 10, dans lequel le système de fluides est une imprimante à jet d'encre.

12. Ligne de revêtement pour revêtir et/ou couler une surface, où la ligne de revêtement comprend au moins un système de purge d'air selon les revendications 1 à 6.

13. Ligne de revêtement selon la revendication 12, où la ligne de revêtement est adaptée pour revêtir et/ou couler un film.
